# EUROPEAN PATENT APPLICATION

(11) **EP 4 787 940 A1**
(43) Date of publication of application: **05.08.2026**
(21) Application number: 23953434.0
(22) Date of filing: 26.09.2023
(51) Int. Cl.: H04W 24/10

(54) **DELAYED SERVICE REPORT METHOD, TERMINAL, AND STORAGE MEDIUM**

(71) Applicant: Beijing Xiaomi Mobile Software Co., Ltd., Beijing 100085 (CN)
(72) Inventor: LI, Yanhua, Beijing 100085 (CN); JIANG, Xiaowei, Beijing 100085 (CN)
(74) Representative: Gunzelmann, Rainer
(86) International application number: PCT/CN2023/121723
(87) International publication number: WO 2025/065276

(57) **Abstract**

Provided in the embodiments of the present disclosure are a delayed service report method, a terminal, and a storage medium. The method is executed by the terminal. The method comprises: executing delayed service report (DSR) on the basis of the remaining time, wherein the remaining time is the time left before a data packet to be transmitted in a logical channel is discarded. A communication mechanism of the technical solution provided in the embodiments of the present disclosure can adapt to introduced DSR.

## Description

### TECHNICAL FIELD

The disclosure relates to the field of communication technologies, in particular to a delay status reporting (DSR) method, terminal and storage medium.

### BACKGROUND

In the field of communication technologies, if a data packet to be transmitted cannot be scheduled or cannot be scheduled in a timely manner, it is necessary to report a status of the data packet to be transmitted to a network, and thus a DSR mechanism is introduced in related arts.

### SUMMARY

After the introduction of DSR, how to implement the DSR is a question that needs to be considered.

The embodiments of the disclosure provide a DSR method, a terminal and a storage medium.

According to a first aspect, the embodiments of the disclosure provide a DSR method. The method includes:
performing DSR based on a remaining time;
in which the remaining time is a time duration until a data packet to be transmitted in a logical channel is discarded.

According to a second aspect, the embodiments of the disclosure provide a terminal. The terminal includes:
a processing module, configured to perform DSR based on a remaining time;
in which the remaining time is a time duration until a data packet to be transmitted in a logical channel is discarded.

According to a third aspect, the embodiments of the disclosure provide a terminal. The terminal includes:
a memory comprising executable instructions; and
one or more processors;
in which when the executable instructions are executed by the one or more processors, the terminal is caused to implement the method of any embodiment of the disclosure.

According to a fourth aspect, the embodiments of the disclosure provide a storage medium. The storage medium stores instructions, and when the instructions are executed by a communication device, the communication device is caused to implement the method of the first aspect.

The communication mechanism of the technical solution provided by the embodiments of the disclosure can adapt to the introduced DSR.

It should be understood that the above general descriptions and the following detailed descriptions are exemplary and explanatory only, and are not intended to limit the embodiments of the disclosure.

### BRIEF DESCRIPTION OF THE DRAWINGS

The accompanying drawings, which are incorporated in and form part of the specification, illustrate the embodiments of the disclosure and, together with the specification, serve to explain the principles of the embodiments of the disclosure.
FIG. 1a is a schematic structural diagram of a communication system illustrated according to an example embodiment.
FIG. 2a is a flowchart of a DSR method illustrated according to an example embodiment.
FIG. 3a is a flowchart of a DSR method illustrated according to an example embodiment.
FIG. 3b is a flowchart of a DSR method illustrated according to an example embodiment.
FIG. 4a is a schematic structural diagram of a terminal illustrated according to an example embodiment.
FIG. 4b is a schematic structural diagram of a network device illustrated according to an example embodiment.
FIG. 5a is a schematic structural diagram of a user equipment (UE) illustrated according to an example embodiment.
FIG. 5b is a schematic structural diagram of a communication device illustrated according to an example embodiment.

### DETAILED DESCRIPTION

The embodiments of the disclosure provide a DSR method, a terminal and a storage medium.

According to a first aspect, the embodiments of the disclosure provide a DSR method. The method includes:
performing DSR based on a remaining time;
in which the remaining time is a time duration until a data packet to be transmitted in a logical channel is discarded.

In the above embodiments, the DSR is performed based on the remaining time until the data packet to be transmitted in the logical channel is discarded, and thus whether to perform the DSR depends on the time duration until the data packet to be transmitted in the logical channel is discarded, which reduces unnecessary DSR compared with the way of performing DSR at a fixed frequency, thereby saving resources and power consumption.

In combination with some embodiments of the first aspect, in some embodiments, performing the DSR based on the remaining time includes:
determining that the remaining time is less than or equal to a time threshold, and performing the DSR.

In the above embodiments, only if the remaining time is less than or equal to the time threshold, the DSR is performed. It reduces a frequency of performing the DSR, thereby saving resources and power consumption.

In combination with some embodiments of the first aspect, in some embodiments, in a case where the data packet to be transmitted is not detected or the remaining time is not detected to be less than or equal to the time threshold, information of the DSR indicates that an amount of data is a first value.

In the above embodiments, if the data packet to be transmitted is not detected or the remaining time is not detected to be less than or equal to the time threshold, it informs a network about the amount of data being the first value through the information of the DSR.

In combination with some embodiments of the first aspect, in some embodiments, performing the DSR based on the remaining time includes:
performing the DSR based on the remaining time and a timing result of a first timer.

In the above embodiments, when performing the DSR, the remaining time and the timing result of the first timer are both considered, which reduces the frequency of performing the DSR through the timing of the first timer, thereby saving resources and power consumption.

In combination with some embodiments of the first aspect, in some embodiments, performing the DSR based on the remaining time and the timing result of the first timer includes one of:
determining that the remaining time is less than or equal to a time threshold and the first timer expires, and performing the DSR; or
determining that the remaining time is less than or equal to a time threshold and the first timer does not expire, and not performing the DSR.

In the above embodiments, the DSR may be performed either when the remaining time is less than or equal to the time threshold and the first timer expires, or when the remaining time is less than or equal to the time threshold and the first timer does not expire, making this configuration more flexible.

In combination with some embodiments of the first aspect, in some embodiments, the first timer is configured by a network.

In the above embodiments, the network configures the first timer, in order to control DSR.

In combination with some embodiments of the first aspect, in some embodiments, the first timer is configured for the logical channel or for a terminal.

In the above embodiments, the first timer is configured with the logical channel or the terminal as granularity, which makes this configuration mode more flexible.

In combination with some embodiments of the first aspect, in some embodiments, performing the DSR based on the remaining time includes:
performing the DSR based on the remaining time and a detected first amount of data packets or data packet sets.

In the above embodiments, the remaining time and the first amount are both taken into consideration when performing the DSR, which reduces the frequency of performing the DSR through the first amount, thereby saving resources and power consumption.

In combination with some embodiments of the first aspect, in some embodiments, performing the DSR based on the remaining time and the detected first amount of detected data packets or data packet sets includes one of:
determining that the remaining time is less than or equal to a time threshold and the first amount is greater than or equal to an amount threshold, and performing the DSR; or
determining that the remaining time is less than or equal to a time threshold and a variation of the first amount is greater than or equal to a variation threshold, and performing the DSR.

In the above embodiments, the DSR may be performed either when the remaining time is less than or equal to the time threshold and the first amount is greater than or equal to the amount threshold, or when the remaining time is less than or equal to the time threshold and the variation of the first amount is greater than or equal to the variation threshold. Thus, the DSR is performed in a more flexible way.

In combination with some embodiments of the first aspect, in some embodiments, the amount threshold is configured for the logical channel or for a terminal, and the variation threshold is configured for the logical channel or for the terminal.

In the above embodiments, the configuration modes of the amount threshold and the variation threshold are more flexible.

In combination with some embodiments of the first aspect, in some embodiments, performing the DSR based on the remaining time includes one of:
determining that it is a first time that the remaining time is less than or equal to a time threshold, and performing the DSR; or
determining that it is not a first time that the remaining time is detected to be less than or equal to the remaining time threshold and that a priority level of the logical channel is greater than a level threshold, and performing the DSR.

In the above embodiments, the DSR may be performed either when the remaining time is less than or equal to the time threshold for the first time, or when it is determined that it is not the first time that the remaining time is detected to be less than or equal to the time threshold and that the priority level of the logical channel is greater than the level threshold. Therefore, the DSR will be performed in a more flexible way.

In combination with some embodiments of the first aspect, in some embodiments, performing the DSR based on the remaining time includes:
performing the DSR based on a first cycle and the remaining time.

In the above embodiments, the first cycle and the remaining time are both considered when performing the DSR, which reduces the frequency of performing the DSR, thereby saving resources and power consumption.

In combination with some embodiments of the first aspect, in some embodiments, the method further includes:
determining that that a current time is a moment determined based on the first cycle and that the remaining time is not detected to be less than a time threshold, and canceling performing the DSR or indicating that an amount of data is a first value through information of the DSR.

In the above embodiments, if the current time is a moment determined based on the first cycle and the remaining time is not detected to be less than the time threshold, it cancels the DSR or indicates that the amount of data is the first value through the information of the DSR.

According to a second aspect, the embodiments of the disclosure provide a terminal. The terminal includes:
a processing module, configured to perform DSR based on a remaining time;
in which the remaining time is a time duration until a data packet to be transmitted in a logical channel is discarded.

According to a third aspect, the embodiments of the disclosure provide a terminal. The terminal includes:
one or more processors;
in which the terminal is used to implement the method provided in the first aspect.

According to a fourth aspect, the embodiments of the disclosure provide a storage medium for storing instructions. When the instructions are executed by a communication device, the communication device is caused to implement the method described in the optional implementations of the first aspect.

According to a fifth aspect, the embodiments of the disclosure provide a program product. When the program product is executed by a communication device, the communication device is caused to implement the method described in the optional implementations of the first aspect.

According to a sixth aspect, the embodiments of the disclosure provide a computer program. When the computer program is executed by a computer, the computer is caused to implement the method described in the optional implementations of the first aspect.

According to a seventh aspect, the embodiments of the disclosure provide a chip or chip system. The chip or chip system includes a processing circuit, which is configured to implement the method described in the optional implementations of the first aspect.

It is understood that the above terminal, storage medium, program product, computer program, chip or chip system are all used to implement the method of the embodiments of the disclosure. Therefore, the beneficial effects they achieve can refer to the beneficial effects in the corresponding method, which will not be repeated here.

The embodiments of the disclosure provides a DSR method, terminal and storage medium. In some embodiments, terms "resource determining method", "information processing method" and "information transmission method" are interchangeable, and terms "communication system" and "information processing system" are also interchangeable.

Not all of the embodiments of the disclosure are provided in the disclosure, only some embodiments are illustrated below and they are not taken as specific limitations on the protection scope of the disclosure. Without contradiction, in an embodiment, each step may be implemented as an independent embodiment, and steps can be combined arbitrarily. For example, any solution after removing some steps in the embodiment may be implemented as an independent embodiment. The steps in the embodiment may be performed in different orders, and optional implementations of the embodiment can be combined arbitrarily. In addition, the embodiments of the disclosure may also be combined arbitrarily. For example, some or all the steps of different embodiments can be combined arbitrarily, and each embodiment can be arbitrarily combined with optional implementations of other embodiments.

In the embodiments of the disclosure, unless there are special explanations and/or logical conflicts, terms and/or descriptions of the embodiments are consistent and can refer to each other. Technical features in different embodiments can be combined as new embodiments according to their inherent logical relations.

Terms used in the embodiments of the disclosure are only for the purpose of describing specific embodiments, and are not considered as limitations to the disclosure.

In the embodiments of the disclosure, unless otherwise specified, an element expressed in a singular form through "a", "an" "the" "the above", "said", "the above described" or "this", is interpreted as that there is "one and only one", "one or more" or "at least one" of such element. For example, when an article, e.g., "a", "an" or "the" in English, is used in translation, a noun after the article can be interpreted in a singular form or in a plural form.

In the embodiments of the disclosure, "a plurality of" refers to "two or more".

In some embodiments, terms "at least one of", "one or more", "a plurality of" and "multiple" are interchangeable.

In some embodiments, descriptions such as "at least one of A or B", "A and/or B", "in one case A, while in another case B", and "in response to one case A, while in response to another case B" may be used in the following technical solutions depending on the specific conditions: in some embodiments, A is executed independent of B; in some embodiments, B is executed independent of A; in some embodiments, A and B are selectively executed; and in some embodiments, A and B are both executed. The same applies when there are more branches such as A, B and C.

In some embodiments, "A or B" may be used in the following technical solutions depending on the specific conditions: in some embodiments, A is executed independent of B; in some embodiments, B is executed independent of A; and in some embodiments, A and B are selectively executed. The same applies when there are more branches such as A, B and C.

The prefixes such as "first" and "second" in the embodiments of the disclosure are used only for distinguishing different objects. The prefix is not intended to limit the position, order, priority, quantity or content of a certain object. The description of the object can refer to related contexts in the descriptions of the claims and the embodiments, and should not constitute unnecessary limitations because of the use of prefix. For example, when describing a "field", the prefixes "first" and "second" in "first field" and "second field" do not indicate the positions or orders of the two fields or whether the "first field" and "second field" are in the same message or not, nor do they define the sequence of the "first field" and "second field". For another example, when describing a "level", the prefixes "first" and "second" in "first level" and "second level" do not limit the priorities of the levels. Moreover, an ordinal number used to describe an object does not limit the quantity of the object, and it is possible that there are one or more of such object. Taking "first device" as an example, there may be one or more "first devices". In addition, objects with different prefixes may refer to the same object or different objects. For example, when describing a "device", "first device" and "second device" may refer to the same device or different devices, or may refer to the same device type or different device types. When describing "information", "first information" and "second information" may refer to the same information or different information, or may refer to the same content or different contents.

In some embodiments, "comprising A", "containing A", "used to indicate A" and "carrying A" may be interpreted as "directly carrying A" or "indirectly indicating A".

In some embodiments, terms "in response to", "in response to determining", "in the case of", "when", "while", "if" and "assuming that" are interchangeable.

In some embodiments, terms "greater than", "greater than or equal to", "more than" "more than or equal to", "higher than", "higher than or equal to", "no less than", "no lower than" and "above" are interchangeable. Moreover, terms "less than", "less than or equal to", "lower than", "lower than or equal to", "smaller than", "smaller than or equal to", "no greater than", "no higher than" and "below" are interchangeable.

In some embodiments, the device/apparatus may be interpreted as physical or virtual, and its name is not limited to those listed in the embodiments. It may also be referred to as "equipment", "device", "circuit", "network element", "node", "function", "unit", "section", "system", "network", "chip", "chip system", "entity" and "object" when appropriate.

In some embodiments, "network" may be interpreted as a device included in the network, such as an access network device and a core network device.

In some embodiments, "access network (AN) device" may also be referred to as "radio access network (RAN) device", "base station (BS)", "radio BS" or "fixed station". In some embodiments, it may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier" or "bandwidth part (BWP)".

In some embodiments, "terminal" or "terminal device" may also be referred to as "UE", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client" or "client".

In some embodiments, data and information are obtained by means comply with the laws and regulations of the host country.

In some embodiments, data and information are obtained with the consent of users.

In addition, each element, row or column in the tables of the embodiments of the disclosure may be implemented as an independent embodiment, or any combination of elements, rows and columns may be implemented as an independent embodiment.

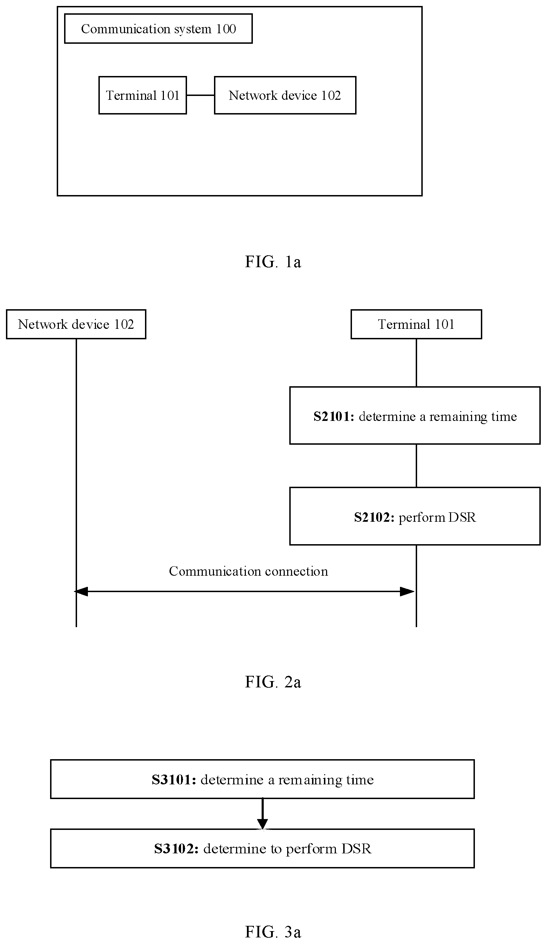

FIG. 1a is a schematic structural diagram of a communication system illustrated according to an embodiment of the disclosure.

As illustrated in FIG. 1a, the communication system 100 includes a terminal 101 and a network device 102.

In some embodiments, the network device 102 includes at least one of an access node (AN) device or a core network device.

In some embodiments, the terminal 101 includes at least one of a mobile phone, a wearable device, an Internet of Things (IoT) device, a car with communication functions, a smart car, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city or a wireless terminal in smart home, which is not limited herein.

In some embodiments, the AN device may be a node or a device that connects the terminal to a wireless network. The AN device includes at least one of an evolved Node B (eNB) in a 5th generation (5G) mobile communication system, a next generation eNB (ng-eNB), a next generation NodeB (gNB), a node B (NB), a home NB (HNB), a home eNB (HeNB), a wireless backhaul equipment, a radio network controller (RNC), a BS controller (BSC), a base transceiver station (BTS), a base band unit (BBU), a mobile switching center, a BS in a 6th generation (6G) mobile communication system, an Open RAN, a Cloud RAN, a BS in other communication systems, or an access node in a wireless fidelity (Wi-Fi) system, which is not limited here.

In some embodiments, the technical solution of the disclosure is applied to the Open RAN. In this case, interfaces between AN devices or interfaces within an AN device involved in the embodiments of the disclosure may be used as internal interfaces of the Open RAN. The procedures and information interactions between these internal interfaces are implemented by software or programs.

In some embodiments, the AN device is composed of a central unit (CU) and distributed units (DUs), and the CU may also be called as control unit. The use of CU-DU structure allows to divide a protocol layer of the AN device, such that some functions of the protocol layer are placed in the CU for centralized control, and some or all of the remaining functions of the protocol layer are distributed in the DUs that are centrally controlled by the CU, which is not limited here.

In some embodiments, the core network device may be a device, including one or more network elements, or a plurality of devices or device groups, each including some or all of the one or more network elements. The network element may be virtual or physical. The core network includes at least one of an evolved packet core (EPC), a 5G core network (CN) or a next generation core (NGC).

It is understandable that to clearly illustrate the technical solution of the embodiments of the disclosure, its applicable communication system is introduced first in the embodiments of the disclosure, which does not constitute as a limitation on the technical solution provided by the embodiments of the disclosure. Those skilled in the art understand that as system architectures evolve and new business scenarios emerge, the technical solution provided by the embodiments of the disclosure is also applicable to similar technical problems.

The following embodiments of the disclosure are applied to the entire or a portion of the communication system 100 in FIG. 1a, which is not limited herein. The entities shown in FIG. 1a are examples. The communication system may include all or part of the entities in FIG. 1a, and may also include entities not shown in FIG. 1a. The quantity and form of each entity are arbitrary. The connection relationships between these entities are illustrated as examples. For example, these entities may or may not be connected. If these entities are connected, they may be connected by any means, e.g., directly or indirectly, in a wired manner or wirelessly.

The embodiments of the disclosure may be applied to long-term evolution (LTE), LTE-Advanced (LTE-A), LTE-Beyond (LTE-B), SUPER 3G, IMT-Advanced, 4th generation (4G) mobile communication system, 5G, 5G new radio (NR), future radio access (FRA), new-radio access technology (RAT), NR, new radio access (NX), future generation radio access (FX), global system for mobile communications (GSM (registered trademark)), CDMA2000, ultra mobile broadband (UMB), IEEE 802.11(Wi-Fi (registered trademark)), IEEE 802.16 (WiMAX (registered trademark)), IEEE 802.20, ultra-wideband (UWB), Bluetooth (registered trademark), public land mobile network (PLMN), Device-to-Device (D2D) system, Machine to Machine (M2M) system, IoT system, Vehicle-to-Everything (V2X), systems using other communication methods or their next generation systems. In addition, the above systems may be combined for applications, such as a combination of LTE/LTE-A and 5G.

In multi-modal services, data usually consists of multiple Quality of Service (QoS) flows, and the corresponding traffic volume is very large. However, multi-modal traffic flows requires a certain delay during transmission. For example, some data streams need to arrive at a server at the same time for decoding. The delay of any one of the data streams will lead to the failure of joint decoding of data streams. However, the scheduling of network is dynamic. Therefore, in some cases, even if some data streams belong to low-priority logical channels, if some data packets have not been scheduled for a long time, it is necessary to send a buffer status report (BSR) to inform the network as soon as possible. However, according to a relevant mechanism, the BSR can only be sent when data sent over high-priority logical channels arrives, which can not meet the demand of emergency scheduling. Therefore, it is necessary to consider the optimization of emergency scheduling in the multi-modal services.

In some embodiments, DSR is introduced, that is, the terminal performs DSR to carry information related to the delay of data transmission, for example, information that a remaining time of an uplink data packet is less than a certain threshold because it has not been scheduled for a long time. The remaining time of the data packet is a time duration until the packet is discarded. For example, the remaining time is determined based on a discard timer of a packet data convergence protocol (PDCP).

In some embodiments, threshold-based DSR is supported. For example, when the remaining time of a PDU or PDU set is less than the threshold configured by the network, DSR is triggered. For example, the threshold is configured by taking a logical channel group (LCG) as a granularity.

In some embodiments, the procedure of DSR is used to provide a delay status of uplink (UL) data to a serving BS (gNB). The delay status includes a remaining time of the UL data, which is derived according to the value of its associated PDCP discardTimer at the time of the first symbol of the PUSCH transmission in which the DSR is sent. The DSR also includes an amount of data corresponding to the remaining time.

In some embodiments, radio resource control (RRC) controls DSR by configuring the following parameter:
a remaining time threshold, which is a threshold for the remaining time of the UL data configured to trigger the DSR of the LCG.

In some embodiments, a media access control (MAC) entity may trigger DSR when the remaining time of the PDU or the PDU set in the LCG (if configured with DSR) is less than its associated remaining time threshold.

FIG. 2a is an interactive schematic diagram of DSR illustrated according to an embodiment of the disclosure. As illustrated in FIG. 2a, the embodiment of the disclosure involves in a DSR method. The method is applied to the communication system 100, and includes the following steps.

At step S2101, the terminal determines a remaining time.

In some embodiments, the remaining time is a time duration until a data packet to be transmitted in a logical channel is discarded.

In some embodiments, the remaining time is a time duration until a data packet to be transmitted in a LCG is discarded.

In some embodiments, the remaining time is a time duration until a data packet set to be transmitted in a logical channel is discarded.

In some embodiments, the remaining time is a time duration until a data packet set to be transmitted in a LCG is discarded.

At step S2102, the terminal performs DSR.

In some embodiments, the terminal performs the DSR based on the remaining time.

In some embodiments, when it is determined that the remaining time is less than or equal to a time threshold, the DSR is performed.

In some embodiments, the time threshold is configured by a network.

In some embodiments, the time threshold is specified by a protocol.

In some embodiments, if the data packet to be transmitted is not detected, information of the DSR indicates that an amount of data is a first value.

In some embodiments, if the remaining time is not detected to be less than or equal to the time threshold, the information of the DSR indicates that the amount of data is the first value.

In some embodiments, the first value is 0.

In some embodiments, the terminal performs the DSR based on the remaining time and a timing result of a first timer.

In some embodiments, the first timer is configured by the network.

In some embodiments, the first timer is specified by the protocol.

In some embodiments, the first timer is configured for a logical channel or a LCG. For example, each logical channel corresponds to a timer.

In some embodiments, the first timer may be configured for the terminal (Per UE). For example, each terminal corresponds to a timer.

In some embodiments, the timing of the first timer is configured by the network.

In some embodiments, the timing of the first timer is specified by the protocol.

In some embodiments, the first timer is a inhibit timer.

In some embodiments, the terminal determines that the remaining time is less than or equal to the time threshold and the first timer expires, and the terminal performs the DSR.

In some embodiments, after the terminal triggers DSR again, it needs to wait for the first timer to expire before it performs DSR again.

In some embodiments, the terminal determines that the remaining time is less than or equal to the time threshold and the first timer does not expire, and the terminal performs the DSR.

In some embodiments, the terminal will start the first timer after first triggering the DSR. When the DSR is triggered again, it is necessary to determine whether the first timer expires. If the first timer does not expire, the terminal performs the DSR.

In some embodiments, the terminal performs the DSR based on the remaining time and a detected first amount of detected data packets or data packet sets.

In some embodiments, when it is determined that the remaining time is less than or equal to the time threshold and the first amount is greater than or equal to an amount threshold, the terminal performs the DSR.

In some embodiments, the terminal needs to perform the DSR after detecting that the first amount is greater than or equal to the amount threshold.

In some embodiments, after the terminal first triggers the DSR, if the DSR is triggered again, it is necessary to determine whether the detected first amount of data is greater than or equal to the amount threshold before the DSR is performed again.

In some embodiments, when it is determined that the remaining time is less than or equal to the time threshold and a variation of the first amount is greater than or equal to a variation threshold, the terminal performs the DSR.

In some embodiments, after the terminal first triggers the DSR, if it is triggered again, it is necessary to determine whether the variation of the detected first amount (compared with the last DSR) is greater than or equal to the variation threshold before the terminal performs the DSR again.

In some embodiments, the amount threshold and/or the variation threshold is/are configured by the network.

In some embodiments, the amount threshold and/or the variation threshold is/are specified by the protocol.

In some embodiments, the amount threshold and/or the variation threshold is/are configured for the logical channel.

In some embodiments, the amount threshold and/or the variation threshold is/are configured for the LCG.

In some embodiments, the amount threshold and/or the variation threshold is/are configured for the terminal.

In some embodiments, the terminal determines that it is a first time that the remaining time is less than or equal to the remaining time threshold, the terminal performs the DSR.

In some embodiments, the terminal performs the DSR only when it detects that a remaining time of a data packet or data packet set to be transmitted in a logical channel or LCG is less than the time threshold, and it has not previously detected that a remaining time of any data packet or data packet set to be transmitted in a logical channel or LCG is less than the time threshold.

In some embodiments, the terminal determines that it is not a first time that the remaining time is detected to be less than or equal to the time threshold and that a priority level of the logical channel is greater than a level threshold, and the terminal performs the DSR.

In some embodiments, the terminal only performs the DSR when it detects that a remaining time of a data packet set to be transmitted in a logical channel or LCG is less than the time threshold. Although it has previously detected that a remaining time of a data packet or data packet set to be transmitted in a logical channel or LCG is less than the time threshold, the terminal performs the DSR when the logical channel has a higher priority level.

In some embodiments, the terminal performs the DSR based on a first cycle and the remaining time.

In some embodiments, the terminal determines that that a current time is a moment determined based on the first cycle and that the remaining time is not detected to be less than the remaining time threshold, the terminal cancels the DSR or indicates that an amount of data is a first value through information of the DSR. For example, the first value may be 0.

In some embodiments, the terminal performs the DSR periodically. If the terminal does not detect that a remaining time of a specific data packet or data packet set is less than the time threshold when performing the DSR, it cancels the DSR or indicates that the amount of data is 0 through the information of the DSR.

In some embodiments, terms "information", "message", "signal", "signaling", "report", "configuration", "indication", "instruction", "command", "channel", "parameter", "field" and "data" are interchangeable.

In some embodiments, terms "send", "launch", "report" and "transmit" are interchangeable.

The DSR method according to the embodiments of the disclosure may include at least one of step S2101 or step S2102. For example, step S2101 may be implemented as an independent embodiment, and step S2102 may be implemented as an independent embodiment, which is not limited herein.

FIG. 3a is a flowchart of a DSR method illustrated according to an embodiment of the disclosure. As illustrated in FIG. 3a, the embodiment of the disclosure involves in a DSR method. The method is performed by a type-1 terminal, and includes the following steps.

At step S3101, a remaining time is determined.

In some embodiments, the optional implementations of step S3101 can refer to the optional implementations of step S2101 in FIG. 2a, and other related parts in the embodiment of FIG. 2a, which will not be repeated herein.

At step S3102, it is determined to perform DSR.

In some embodiments, the optional implementations of step S3102 may refer to the optional implementations of step S2102 in FIG. 2a, and other related parts in the embodiment of FIG. 2a, which will not be repeated herein.

The method according to the embodiment of the disclosure may include at least one of step S3101 or step S3102. For example, step S3101 may be implemented as an independent embodiment, and step S3102 may be implemented as an independent embodiment, which is not limited herein.

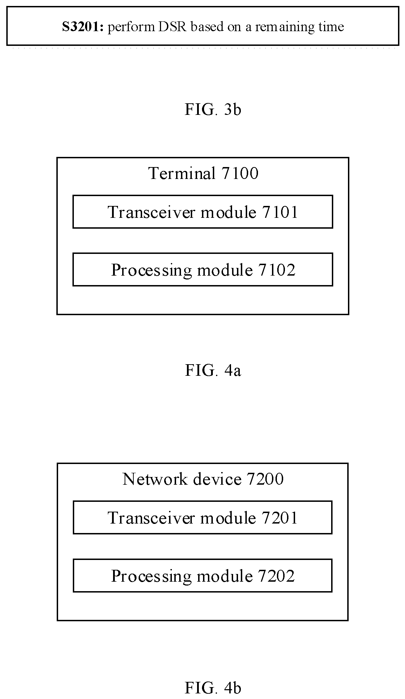

FIG. 3b is a flowchart of a DSR method illustrated according to an embodiment of the disclosure. As illustrated in FIG. 3b, the embodiment of the disclosure involves in a DSR method. The method is performed by a type-1 terminal, and includes the following steps.

At step S3201, DSR is performed based on a remaining time.

In some embodiments, the optional implementations of step S3201 may refer to the optional implementations of steps S2102 and S2103 in FIG. 2a, and other related parts in the embodiment of FIG. 2a, which will not be repeated herein.

In some embodiments, the remaining time is a time duration until a data packet to be transmitted in a LCG is discarded, or the remaining time is a time duration until a data packet set to be transmitted in a logical channel is discarded, or the remaining time is a time duration until a data packet set to be transmitted in a LCG is discarded.

In some embodiments, performing the DSR based on the remaining time includes:
determining that the remaining time is less than or equal to a time threshold, and performing the DSR.

In some embodiments, if the data packet to be transmitted is not detected or the remaining time is not detected to be less than or equal to the time threshold, information of the DSR indicates that an amount of data is a first value.

In some embodiments, performing the DSR based on the remaining time includes:
performing the DSR based on the remaining time and a timing result of a first timer.

In some embodiments, performing the DSR based on the remaining time and the timing result of the first timer includes one of:
determining that the remaining time is less than or equal to the time threshold and the first timer expires, and performing the DSR; or
determining that the remaining time is less than or equal to the time threshold and the first timer does not expired, and not performing the DSR.

In some embodiments, the first timer is configured by a network.

In some embodiments, the first timer is configured for the logical channel or for a terminal.

In some embodiments, performing the DSR based on the remaining time includes:
performing the DSR based on the remaining time and a detected first amount of detected data packets or data packet sets.

In some embodiments, performing the DSR based on the remaining time and the detected first amount of detected data packets or data packet sets includes one of:
determining that the remaining time is less than or equal to a time threshold and the detected first amount is greater than or equal to an amount threshold, and performing the DSR; or
determining that the remaining time is less than or equal to the time threshold and a variation of the first amount is greater than or equal to a variation threshold, and performing the DSR.

In some embodiments, the amount threshold is configured for the logical channel or for a terminal, and the variation threshold is configured for the logical channel or for the terminal.

In some embodiments, performing the DSR based on the remaining time includes one of:
determining that it is a first time that the remaining time is less than or equal to a time threshold, and performing the DSR; or
determining that it is not a first time that the remaining time is detected to be less than or equal to the time threshold and that a priority level of the logical channel is greater than a level threshold, and performing the DSR.

In some embodiments, performing the DSR based on the remaining time includes:
performing the DSR based on a first cycle and the remaining time.

In some embodiments, the method further includes:
determining that that a current time is a moment determined based on the first cycle and that the remaining time is not detected to be less than a time threshold, canceling the DSR or indicating that an amount of data is a first value through information of the DSR.

In order to better understand the embodiments of the disclosure, the technical scheme of the disclosure will be further explained through example options.

In some embodiments, a scheme for DSR is provided.

In some embodiments, the terminal detects a remaining time of a data packet or data packet set to be transmitted in a logical channel or LCG is less than a preset threshold.

In some embodiments, if the terminal does not detect that a remaining time of a specific data packet or data packet set is less than the preset threshold, it indicates that the amount of data is 0 in the DSR.

### Option 1 (embodiments based on conditions of a timer)

In some embodiments, the terminal performs DSR based on a first timer of a network.

In some embodiments, after the terminal triggers DSR, it is necessary to perform DSR again after the timer expires.

In some embodiments, the terminal starts the timer after first triggering the DSR. If the DSR is triggered again, the terminal can perform the DSR if the timer expires.

In some embodiments, the timer is an inhibit timer, which is a timer configured by the network.

In some embodiments, the timer is a timer configured for each LCG, which may also be a timer configured per UE.

### Option 2 (data amount threshold-based embodiments)

In some embodiments, the terminal needs to perform DSR only after detecting that a remaining time of a specific data packet or data packet set is less than a preset threshold (corresponding to the remaining time threshold) and its amount reaches a preset threshold.

In some embodiments, the terminal needs to perform the DSR for the first time after a detected amount of data reaches a preset threshold.

In some embodiments, after the terminal first triggers the DSR, when the DSR is triggered again, the terminal needs to wait for the detected amount of data to reach the threshold (corresponding to the preset amount threshold) before it performs the DSR again.

In some embodiments, after the terminal first triggers the DSR, when the DSR is triggered again, the terminal performs the DSR again only when a variation of the detected amount of data (compared with the detected amount of data of the last DSR) reaches a threshold.

In some embodiments, the threshold for the amount of data is configured for each LCG, and may also be configured per UE.

### Option 3

In some embodiments, the terminal performs the DSR when it detects that a remaining time of a data packet or data packet set to be transmitted in a logical channel or LCG is less than a preset threshold, and when it has not previously detected that a remaining time of any data packet or data packet set to be transmitted in a logical channel or LCG is less than the preset threshold.

In some embodiments, although it has detected that a remaining time of a data packet or data packet set to be transmitted in a logical channel or LCG is less than the preset threshold, when it detects that a remaining time of a data packet or data packet set to be transmitted in a logical channel or LCG is less than the preset threshold, the terminal only performs the DSR when the priority level of the logical channel is higher.

### Option 4 (periodic timer-based embodiments)

In some embodiments, the terminal performs DSR after a periodic timer expires.

In some embodiments, when the terminal performs DSR periodically, if the terminal does not detect that a remaining time of a data packet or data packet set to be transmitted is less than a preset threshold at the time of reporting, it cancels the DSR or indicates that an amount of data is 0 during DSR.

It should be noted that the above options may be implemented in combination.

For example, option 1 and option 2 are combined for use, which is not limited here. For example, after the DSR is triggered based on the threshold, it is also necessary to consider whether an inhibit timer is running. Only when the discard timer is not running can it be reported.

Through the above options, frequent triggering of DSR can be avoided, thereby reducing a signaling overhead from the terminal to the network.

The embodiments of the disclosure provide an apparatus for implementing any of the above methods. For example, an apparatus is provided, which includes units/modules for implementing steps performed by the terminal in any of the above methods. For another example, another apparatus is provided, which includes units/modules for implementing steps performed by the network device (e.g., AN device, CN functional node or CN device) in any of the above methods.

It should be understood that the units/modules in the above apparatus are divided based on their logical functions, and some or all of the above units/modules may be integrated on a single physical entity or may be physically separated in practical applications. In addition, the units/modules in the above apparatus may be implemented by software called by a processor which is included in the apparatus and connected to a memory. The memory stores instructions, and the processor calls the instructions stored in the memory to implement any of the above methods or to implement functions of the units/modules in the above apparatus. The processor may be a general-purpose processor, such as a central processing unit (CPU) or a micro-processor, and the memory is a memory in the apparatus or a memory external to the apparatus. Or, the units/modules in the apparatus may be implemented in the form of a hardware circuit. Some or all of the functions of the units/modules may be achieved through the design of the hardware circuit. The hardware circuit may be understood as one or more processors. For example, in an implementation, the hardware circuit is an application-specific integrated circuit (ASIC). In this case, some or all of the functions of the units/modules are achieved through the design of a logical relationship between components in the circuit. In another implementation, the hardware circuit may be implemented through a programmable logic device (PLD), such as a field programmable gate array (FPGA). It includes a large number of logical gates, and their connection relationships are configured through a configuration file to implement some or all of the functions of the above units/modules. All the units/modules of the above apparatus may be implemented entirely through the software called by the processor, or entirely through the hardware circuit, or partially through the software called by the processor and partially through the hardware circuit.

In the embodiments of the disclosure, the processor is a circuit having signal processing capabilities. In an implementation, the processor may be a circuit having instruction reading and executing capabilities, such as a CPU, a micro-processor, a graphics processing unit (GPU) (which is understood as a micro-processor), or a digital signal processor (DSP). In another implementation, the processor implements certain functions through the logical relationship of the hardware circuit, which may be fixed or re-configurable. For example, the processor may be a hardware circuit implemented by an ASIC or a PLD, such as a FPGA. For a re-configurable hardware circuit, the procedure for the processor to load the configuration file to configure the hardware circuit is understood as a procedure for the processor to load the instructions to implement some or all of the functions of the above units/modules. In addition, the processor may also be an artificial intelligence (AI)-designed hardware circuit, which is understood as an ASIC, such as a neural network processing unit (NPU), a tensor processing unit (TPU) and a deep learning processing unit (DPU).

FIG. 4a is a schematic structural diagram of a terminal provided by an embodiment of the disclosure. As illustrated in FIG. 4a, the terminal 7100 includes at least one of a transceiver module 7101 or a processing module 7102. In some embodiments, the transceiver module is configured to receive first information. Optionally, the above transceiver module is used to perform at least one of communication steps (e.g., step S2101, but not limited thereto) such as transmission and/or reception performed by the terminal 101 in any of the above methods, which will not be repeated here. Optionally, the above processing module is used to perform at least one of other steps (e.g., step S2102) performed by the terminal 101 in any of the above methods, which will not be repeated here.

FIG. 4b is a schematic structural diagram of a network device provided by an embodiment of the disclosure. As illustrated in FIG. 4b, the network device 7200 includes at least one of a transceiver module 7201 or a processing module 7202. In some embodiments, the transceiver module is used for sending and receiving information. Optionally, the above transceiver module is used to perform at least one of communication steps such as transmission and/or reception performed by the network device 102 in any of the above methods, which will not be repeated here. In some embodiments, the transceiver module includes a sending module and/or a receiving module. The sending module and the receiving module may be separated or integrated together. Optionally, the transceiver module may be replaced by a transceiver. Optionally, the above processing module is used to perform at least one of other steps performed by the network device 102 in any of the above methods, which will not be repeated here.

In some embodiments, the processing module may be one module or may include a plurality of sub-modules. Optionally, the plurality of sub-modules each performs all or part of the steps of the processing module. Optionally, the processing module may be replaced by a processor.

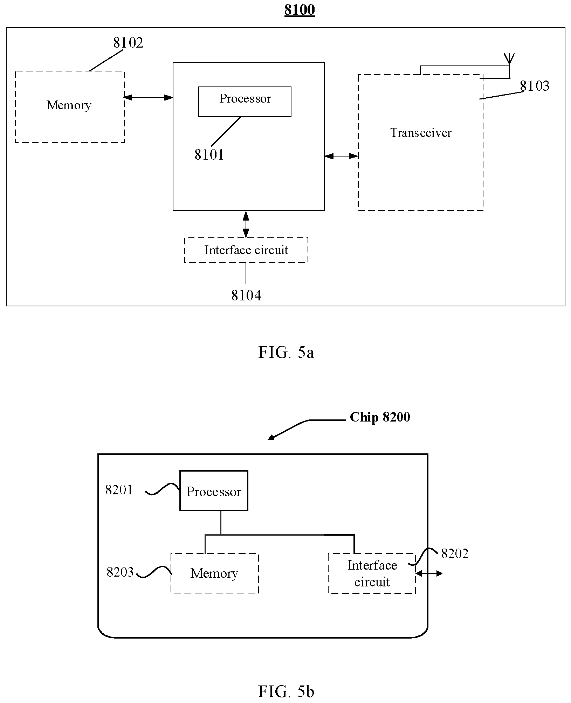

FIG. 5a is a schematic structural diagram of a communication device 8100 provided by an embodiment of the disclosure. The communication device 8100 may be a network device (e.g., an AN device or a CN device), a terminal (e.g., a UE), a chip, chip system or processor that supports the network device to implement any of the above methods, or a chip, chip system or processor that supports the terminal to implement any of the above methods. The communication device 8100 is used to implement the methods described in the above method embodiments, which can refer to the descriptions in the above method embodiments.

As illustrated in FIG. 5a, the communication device 8100 includes one or more processors 8101. The processor 8101 may be a general-purpose processor or a dedicated processor, such as a baseband processor or a central processor. The baseband processor is used to process communication protocols and communication data, while the central processor is used to control the communication device (e.g., a BS, a baseband chip, a terminal, a terminal chip, a DU or a CU), execute programs and process data of the programs. The communication device 8100 is used to implement any of the above methods.

In some embodiments, the communication device 8100 further includes one or more memories 8102 for storing instructions. Optionally, all or part of the memories 8102 are external to the communication device 8100.

In some embodiments, the communication device 8100 includes one or more transceivers 8103. In this case, the transceiver 8103 performs at least one of communication steps such as transmission and/or reception in the above methods, and the processor 8101 performs at least one of other steps.

In some embodiments, the transceiver may include a receiver and/or a transmitter. The receiver and the transmitter may be separated or integrated together. Optionally, terms "transceiver", "transceiver unit", "transceiver machine" and "transceiver circuit" are interchangeable, and terms "transmitter", "transmitting unit", "transmitter machine" and "transmitting circuit" are also interchangeable. In addition, terms "receiver", "receiving unit", "receiver machine" and "receiving circuit" are interchangeable.

In some embodiments, the communication device 8100 further includes one or more interface circuits 8104. Optionally, the interface circuit 8104 is connected with the memory 8102, and it is used to receive signals from the memory 8102 or other devices and send signals to the memory 8102 or other devices. For example, the interface circuit 8104 can read the instructions stored in the memory 8102 and send the instructions to the processor 8101.

The communication device 8100 described in the above embodiments may be a network device or a terminal. However, the scope of the communication device 8100 is not limited in the disclosure, and the structure of the communication device 8100 is not limited by FIG. 5a. The communication device may be a standalone device or part of a larger device. For example, the communication device may be: (1) a standalone integrated circuit (IC), chip, chip system or sub-system; (2) a collection of one or more ICs (optionally, the collection includes storage components for storing data and programs); (3) an ASIC, such as a modem; (4) a module that can be embedded in other devices; (5) a receiver, a terminal, a smart terminal, a cellular phone, a wireless device, a handheld device, a mobile unit, an in-vehicle device, a network device, a cloud device, an AI device, etc.; or (6) others.

FIG. 5b is a schematic structural diagram of a chip 5200 provided by an embodiment of the disclosure. The case that the communication device 8100 is a chip or chip system can refer to the schematic structural diagram of the chip 8200 shown in FIG. 5b, which is not limited herein.

The chip 8200 includes one or more processors 8201, and is used to implement any of the above methods.

In some embodiments, the chip 8200 includes one or more interface circuits 8202. Optionally, the interface circuit 8202 is connected to a memory 8203, and it is used to receive signals from the memory 8203 or other devices and send signals to the memory 8203 or other devices. For example, the interface circuit 8202 can read instructions stored in the memory 8203 and send the instructions to the processor 8201.

In some embodiments, the interface circuit 8202 performs at least one of communication steps (e.g., steps S2101 and S3101, but not limited thereto) such as transmission and/or reception in the above methods, and the processor 8201 performs at least one of other steps (e.g., steps S2101 and S2102, but not limited thereto).

In some embodiments, terms "interface circuit", "interface", "transceiver pin" and "transceiver" are interchangeable.

In some embodiments, the chip 8200 further includes one or more memories 8203 for storing instructions. Optionally, all or part of the memories 8203 are external to the chip 8200.

The disclosure also provides a storage medium. The storage medium stores instructions, and when the instructions are executed by the communication device 8100, the communication device 8100 is caused to implement any of the above methods. Optionally, the storage medium is an electronic storage medium. Optionally, the storage medium may be a computer-readable storage medium or a storage medium readable by other devices, which is not limited herein. Optionally, the storage medium may be a non-transitory storage medium or a transitory storage medium, which is not limited herein.

The disclosure also provides a program product. When the program product is executed by the communication device 8100, the communication device 8100 is caused to implement any of the above methods. Optionally, the program product is a computer program product.

The disclosure also provides a computer program. When the computer program is executed by a computer, the computer is caused to implement any of the above methods.

## Claims

1. A delay status reporting (DSR) method, comprising:
performing a DSR based on a remaining time,
wherein the remaining time is a time duration until a data packet to be transmitted in a logical channel is discarded.

2. The method of claim 1, wherein the DSR based on the remaining time comprises:
determining that the remaining time is less than or equal to a time threshold; and
performing the DSR.

3. The method of claim 1, wherein in a case where the data packet to be transmitted is not detected or the remaining time is not detected to be less than or equal to a time threshold, information of the DSR indicates that an amount of data is a first value.

4. The method of claim 1, wherein performing the DSR based on the remaining time comprises:
performing the DSR based on the remaining time and a timing result of a first timer.

5. The method of claim 4, wherein performing the DSR based on the remaining time and the timing result of the first timer comprises one of:
determining that the remaining time is less than or equal to a time threshold and the first timer expires, and performing the DSR; or
determining that the remaining time is less than or equal to a time threshold and the first timer does not expire, and not performing the DSR.

6. The method of claim 5, wherein the first timer is configured by a network.

7. The method of any one of claims 4-6, wherein the first timer is configured for the logical channel or for a terminal.

8. The method of claim 1, wherein performing the DSR based on the remaining time comprises:
performing the DSR based on the remaining time and a detected first amount of data packets or data packet sets.

9. The method of claim 8, wherein performing the DSR based on the remaining time and the detected first amount of data packets or data packet sets comprises one of:
determining that the remaining time is less than or equal to a time threshold and the first amount is greater than or equal to an amount threshold, and performing the DSR; or
determining that the remaining time is less than or equal to a time threshold and a variation of the first amount is greater than or equal to a variation threshold, and performing the DSR.

10. The method of claims 8 or 9, wherein the amount threshold is configured for the logical channel or for a terminal, and the variation threshold is configured for the logical channel or for the terminal.

11. The method of claim 1, wherein performing the DSR based on the remaining time comprises one of:
determining that it is a first time that the remaining time is detected to be less than or equal to a time threshold, and performing the DSR; or
determining that it is not a first time that the remaining time is detected to be less than or equal to time threshold and that a priority level of the logical channel is greater than a level threshold, and performing the DSR.

12. The method of claim 1, wherein performing the DSR based on the remaining time comprises:
performing the DSR based on a first cycle and the remaining time.

13. The method of claim 12, further comprising:
determining that a current time is a moment determined based on the first cycle and that the remaining time is not detected to be less than a time threshold; and
canceling performing the DSR or indicating that an amount of data is a first value through information of the DSR.

14. A terminal, comprising:
a processing module, configured to perform delay status reporting (DSR) based on a remaining time;
wherein the remaining time is a time duration until a data packet to be transmitted in a logical channel is discarded.

15. A terminal, comprising:
a memory comprising executable instructions; and
one or more processors;
wherein when the executable instructions are executed by the one or more processors, the terminal is caused to implement the method of any one of claims 1-14.

16. A storage medium, wherein the storage medium stores instructions, and when the instructions are executed by a communication device, the communication device is caused to implement the method of any one of claims 1-14.
